## Europäisches Patentamt
## European Patent Office
## Office européen des brevets

(19)

(11) Veröffentlichungsnummer: **0 061 576**
**B1**

(12) **EUROPÄISCHE PATENTSCHRIFT**

(45) Veröffentlichungstag der Patentschrift:
02.05.85

(51) Int. Cl.⁴: **H 04 B 7/10, H 01 Q 25/04**

(21) Anmeldenummer: **82101197.0**

(22) Anmeldetag: **18.02.82**

(54) Nachrichtenübertragungseinrichtung für Mikrowellen mit Mehrmodendiversity-Kombinationsempfang.

(30) Priorität: **25.03.81 DE 3111731**

(43) Veröffentlichungstag der Anmeldung:
**06.10.82 Patentblatt 82/40**

(45) Bekanntmachung des Hinweises auf die Patenterteilung:
**02.05.85 Patentblatt 85/18**

(84) Benannte Vertragsstaaten:
**CH DE FR GB IT LI NL**

(56) Entgegenhaltungen:
**DE - A - 2 626 925**
**DE - A - 2 626 926**
**FR - A - 1 571 407**
**US - A - 3 274 604**
**US - A - 3 653 055**
**US - A - 3 877 031**

**1979 INTERNATIONAL SYMPOSIUM DIGEST-ANTENNAS AND PROPAGATION, Band 1, Juni 1979, Seiten 290-294, New York, USA ZHANG RI-RONG et al.: "The new multimode horn composed of a corrugated guide and a smooth-walled guide with changing flare-angles"**

(73) Patentinhaber: **ANT Nachrichtentechnik GmbH, Gerberstrasse 33, D-7150 Backnang (DE)**

(72) Erfinder: **Mörz, Günter, Dr. Ing., Moserstrasse 19, D-7140 Ludwigsburg (DE)**
Erfinder: **Radermacher, Klaus, Dipl.-Ing., Auf dem Hagenbach 58, D-7150 Backnang (DE)**

(74) Vertreter: **Schickle, Gerhard, Dipl.-Ing. et al, ANT Nachrichtentechnik GmbH Patent- und Lizenzabteilung Gerberstrasse 33, D-7150 Backnang (DE)**

## Beschreibung

In der Deutschen Patentschrift 2626925 ist ein Verfahren beschrieben, das die Auswirkungen der in Mikrowellenübertragungsstrecken vorkommenden statistischen Ausbreitungsschwankungen dadurch mildert, dass zur Gewinnung von Winkeldiversitysignalen mehr als ein Wellentyp in der hohlleitergespeisten Empfangsantenne angekoppelt wird. Dieses Verfahren geht von der Tatsache aus, dass in einem sehr grossen Prozentsatz der Übertragungsdauer mindestens ein Wellentyp ein auswertbares Empfangssignal liefert. Mit diesem bekannten Verfahren gelingt es, beispielsweise mit einer einzigen Empfangsantenne, ein Zweifach-Winkeldiversitysystem aufzubauen, das die beiden aus den unterschiedlichen Wellentypen gewonnenen Empfangssignale getrennten Empfängern zuführt und daraus ein Bestsignal ableitet.

Es ist auch möglich, für Mehrwegeübertragungsverfahren mehrere Antennen oder mehrere Erreger in einer Antenne zu verwenden. Das erfordert aber einen grossen Aufwand und führt bei mehreren Erregern in der Antenne zu Schwierigkeiten bei der Übertragung des Sendesignals, da der Spreizwinkel zwischen den einzelnen Strahlungskeulen, z. B. für die Troposcatterübertragung, viel zu gross ist.

Aus der US-PS 3274604 ist ein Richtungsfindungssystem (z. B. Monopuls-Radar) zur Ortung von bewegten reflektierenden Objekten bekannt, bei dem im Antennen-Speisesystem mehrere Hohlleiterwellentypen ausgenutzt werden. Hierbei liefert der auszuwertende Hauptwellentyp und die höheren Wellentypen eine Richtungsinformation des reflektierenden bewegten Objektes, so dass die Antenne entsprechend nachgeführt werden kann und eine Kanonensteuerung oder ein Raketenleitsystem entsprechend gesteuert werden kann. Mit der hier offenbarten Anordnung wird eine völlig andere Aufgabe gelöst, nämlich die Ortung eines bewegten Objektes.

Der Erfindung liegt die Aufgabe zugrunde, eine Nachrichtenübertragungseinrichtung für Mikrowellen mit Mehrwegeausbreitung anzugeben, das nach dem Winkeldiversity-Prinzip arbeitet, mit nur einer Antenne und einem Erreger pro Endstelle auskommt und mit dem eine Vermehrung der voneinander unabhängigen Übertragungswege erreicht wird, dabei soll der Antennengewinn aller beteiligten Strahlungskeulen vergrössert werden, um eine wirkungsvollere Kombination der Empfangssignale zu einem Bestsignal zu erreichen, als es bisher möglich war, dabei soll der Sende- und Empfangsbetrieb auf einfache Weise, d. h. ohne zusätzlichen Zirkulator, gleichzeitig über diese eine Antenne möglich sein.

Die Aufgabe wird gelöst wie im Anspruch 1 beschrieben, die Unteransprüche geben vorteilhafte Weiterbildungen an.

Im folgenden wird die Erfindung an Ausführungsbeispielen anhand von Figuren näher erläutert.

Fig. 1a zeigt das Blockschaltbild einer Endstelle einer Funkübertragungsanlage mit Modendiversity, unter Verwendung eines HF-Kombinators;

Fig. 1b zeigt in Ergänzung zu Fig. 1a eine Möglichkeit zur Verwendung eines ZF- bzw. Basisband-Kombinators;

Fig. 2a zeigt das Feldbild der $H_{10}$- bzw. $H_{20}$-Welle in einem Rechteckhohlleiter.

Fig. 2b zeigt die zu den $H_{10}$- bzw. $H_{20}$-Wellen gehörenden Strahlungskeulen in der Azimutebene;

Fig. 2c zeigt das Feldbild der $H_{11}$- bzw. $E_{11}$-Welle und das dazu gehörende Summenfeld ($H_{11}$ + $E_{11}$) in einem Rechteckhohlleiter;

Fig. 2d zeigt die zu den $H_{10}$- bzw. ($H_{11}$ + $E_{11}$)-Wellen gehörenden Strahlungskeulen in der Elevationsebene;

Fig. 3a zeigt das Feldbild der $H_{21}$- bzw. $E_{21}$-Welle und das dazu gehörende Summenfeld ($H_{21}$ + $E_{21}$) in einem Rechteckhohlleiter;

Fig. 3b zeigt schematisch die Strahlungskeulen-Konfiguration des Summenfeldes $H_{21}$ + $E_{21}$ als Pegelgebirge;

Fig. 4 zeigt den Modenkoppler M mit Erregerhorn E und Subreflektor SR;

Fig. 5 zeigt einen Schnitt in der H-Ebene durch die Hohlleiterabschnitte H, $H_1$, $H_2$ und durch das Erregerhorn E;

Fig. 6 zeigt die Ausleuchtverhältnisse der $H_{10}$- und $H_{20}$-Welle bzw. $H_{11}$ + $E_{11}$)-Welle in der Antenne;

Fig. 7 zeigt das Feldbild der $HE_{11}$- bzw. $HE_{13}$ und deren Summenfeld ($HE_{11}$ + $HE_{13}$) in einem Rechteckhohlleiter;

Fig. 8 zeigt einen Schnitt in der E-Ebene durch die Hohlleiterabschnitte E und H und die Feldverteilung in der Aperturebene der $H_{10}$- und der ($H_{11}$ + $E_{11}$)-Welle;

Fig. 9 zeigt eine schematische Anordnung, die neben den Wellentypen $H_{10}$, $H_{11}$ + $E_{11}$, $H_{20}$ auch noch die Nutzung der ($H_{21}$ + $E_{21}$)-Wellen ermöglicht.

Die vorliegende Erfindung betrifft die Weiterentwicklung, d. h, Verbesserung des in der Deutschen Patentschrift 2626925 beschriebenen Verfahrens zur Sicherstellung eines unterbrechungsfreien Nachrichtenverkehrs mit einem Mikrowellenübertragungssystem mit Mehrwegeausbreitung. Üblicherweise besteht ein Mikrowellenübertragungssystem aus einem Funkfeld (ca. 40...150 km lang) und an den Enden aus jeweils mindestens einer Antenne mit Sende- und Empfangseinrichtungen. Bei Vorliegen einer Mehrwegeausbreitung in Funkfeldern, die beispielsweise keine optische Sicht aufweisen (z. B. Mikrowellenübertragung mit Hilfe der troposphärischen Streustrahlung), kommt es sehr häufig zu Schwundeinbrüchen des Empfangssignales durch Interferenz der Teilwellen. Diese Problematik wurde bisher durch das sogenannte Raumdiversityverfahren (mehrere Empfangsantennen) oder das Winkeldiversityverfahren (mehrere Erreger in einer Antenne) oder das Modendiversityverfahren (zwei Moden in einem Erreger einer Antenne) gelöst. In dem vorliegenden Ausführungsbeispiel werden drei Moden in einem Erreger einer Antenne ausgenutzt.

Als Antennensystem wird ein Cassegrain-System bevorzugt. Es besteht aus einem Hauptreflektor R, Subreflektor SR und Erregerhorn E. Die effektive Brennweite dieses Reflektortyps ist im allgemeinen grösser als bei einem fokusgespeisten Antennentyp. Dies hat zur Folge, dass die Erregerapertur c vergleichsweise grösser gewählt werden muss, was die Existenzfähigkeit höherer Hohlleiterwellentypen begünstigt. Die nachgeschaltete Modenweiche M trennt die Energieanteile verschiedener Wellentypen des Erregerhorns und liefert beispielsweise drei Empfangsausgänge $E_1$, $E_2$, $E_3$ und einen Sendeeingang S. Der Sendeeingang kann dem Wellentyp eines Empfangsausgangs zugeordnet sein.

Die drei Empfangsausgänge $E_1$, $E_2$, $E_3$ können – wie in Fig. 1a gezeigt – einen HF-Kombinator speisen, der vom Empfänger E über eine Steuereinheit St gesteuert wird, so dass an seinem Ausgang ein hochfrequentes Bestsignal bereitgestellt wird, das dem Empfänger E angeboten wird.

Der HF-Kombinator kann in bekannter Weise, wie z. B. in der Zeitschrift NTG-Fachbericht, Bd. 70, S. 199, im Aufsatz «Elektronisches Raumdiversity-System für Richtfunkanlagen» von Ulrich H. Sysel beschrieben, aufgebaut sein.

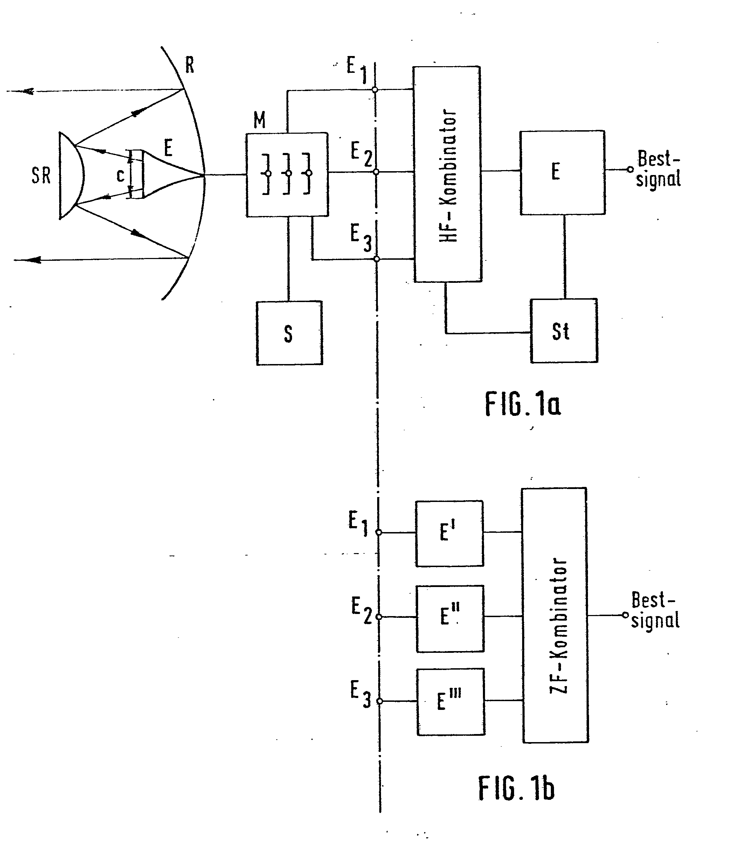

Alternativ kann – wie in Fig. 1b gezeigt – auch ein ZF- oder ein sogenannter Basisband-Kombinator eingesetzt werden, der von drei getrennten Empfängern E', E'', E''' bedient wird. Eine solche Anordnung ist in einem Firmenprospekt der Firma Motorola «MVEC-70 Predetection Combiner» beschrieben.

Zusätzlich zu diesen allgemeinen Merkmalen sollen nun einzelne Baugruppen des Modendiversityverfahrens beschrieben werden, die in ihrer erfindungsgemässen Gestaltung eine besonders hohe Übertragungsgüte ermöglichen.

An erster Stelle steht hier das Antennensystem. Zunächst sollen Wellentypen genannt werden, die bei gegebener Erregerform unabhängige Winkeldiversitydiagramme erzeugen.

a) Rechteckiger Erreger
(Pyramidenhorn mit oder ohne Rillenstruktur)
Hier eignen sich die $H_{10}$-Welle als Hauptkeule und die $H_{20}$-Welle als Winkeldiversitykeule (siehe Deutsche Patentschrift 2626925).

Die $H_{10}$-Welle kann gleichzeitig als Träger des Sendesignals dienen. Bei vertikaler Polarisation des Gegensenders ergibt sich eine Feldkonfiguration in der Erregerapertur nach Fig. 2a und daraus abgeleitet die Form der Antennenkeulen nach Fig. 2b.

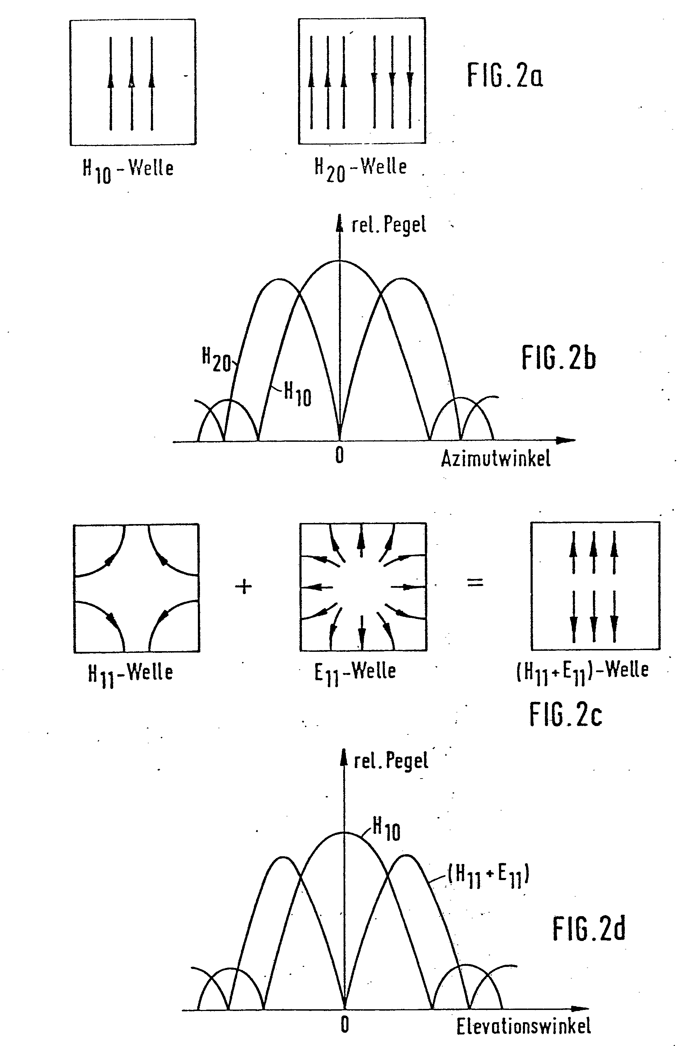

Zusätzlich zu diesem bekannten Zweifach-Modendiversityverfahren wird nun ein Dreifach-Diversitysystem dadurch erzeugt, dass zwei weitere Wellentypen ($H_{11}$- und $E_{11}$-Welle) verwendet werden, die so miteinander kombiniert werden, dass eine Spreizkeule in der Elevationsebene entsteht, die ebenfalls in einem breiten Frequenzbereich vertikal polarisiert ist. Die Feldkombination ist in Fig. 2c, die zugehörigen Strahlungskeulen sind in Fig. 2d gezeichnet.

Im Falle eines rechteckigen Rillenerregers tritt
anstelle der $H_{10}$-Welle die $HE_{11}$-Welle,
anstelle der $H_{20}$-Welle die $HE_{21}$-Welle,
anstelle der $H_{11} + E_{11}$-Welle die $HE_{12}$-Welle.

Die Verwendung einer Kombination von zwei Wellentypen für die vertikale Spreizkeule ($H_{11} + E_{11}$-Welle) ist in der Praxis kein Nachteil, da beide Wellentypen gleiche Ausbreitungskonstanten im Hohlleiter aufweisen und somit der Feldzustand der Apertur bei der Ausbreitung längs des Horns erhalten bleibt.

Bei Rechteckerregern ist es möglich, auch noch eine vierte Diversitykeule zu erzeugen, die aus einer Kombination der $H_{21}$- und $E_{21}$-Welle hervorgeht. Diese Feldkonfiguration ist in Fig. 3a gezeichnet.

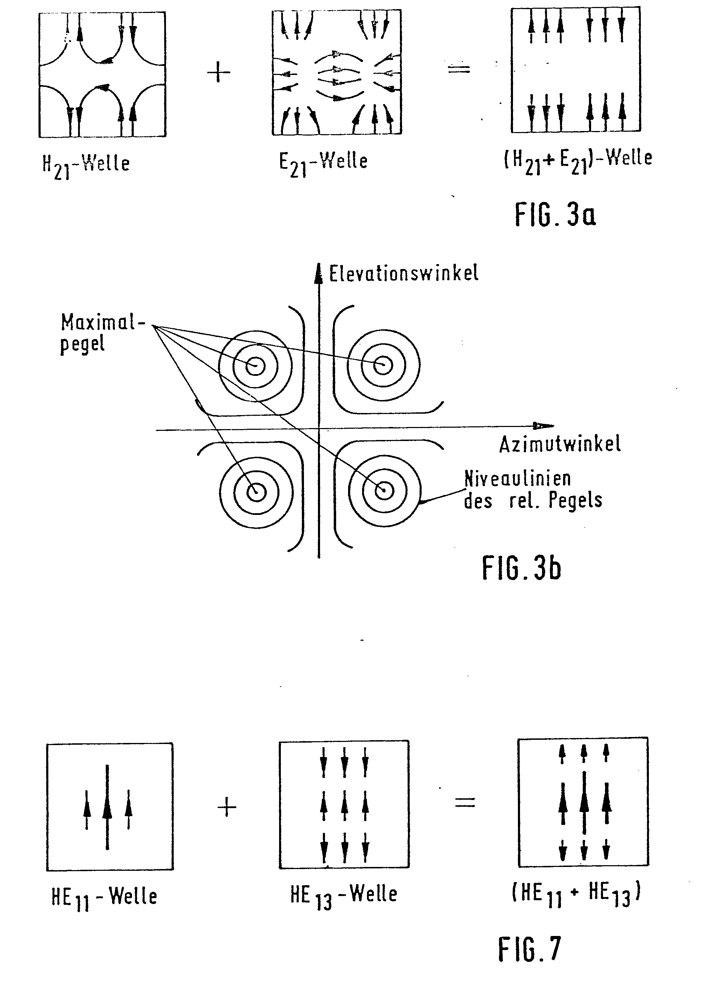

Fig. 3b zeigt schematisch die zugehörige Keulenkonfiguration als Pegelgebirge. Diese Keulenkonfiguration ist sowohl in der Azimut- als auch in der Elevations-Ebene gespreizt und hat vier gleich grosse Feldstärkemaxima. Alle vier Einzelkeulen haben gleichen Maximalgewinn. Im Falle eines Rillenerregers tritt an die Stelle der $H_{21}$- und $E_{21}$-Welle die $HE_{21}$-Welle.

b) Runder Erreger
(Konisches Horn mit glatter oder gerillter Oberfläche)
Hier ist es schwieriger, breitbandig zwei Diversitykeulen (Spreizkeulen) zu erzeugen, die gleiche Polarisation wie die Hauptkeule aufweisen, da hierfür jede Spreizkeule aus jeweils zwei Wellentypen mit unterschiedlicher Ausbreitungskonstante erzeugt werden müssten.

Die nachfolgenden Beschreibungen erfindungsgemässer Speisesysteme gehen daher von rechteckigen Erregerquerschnitten aus.

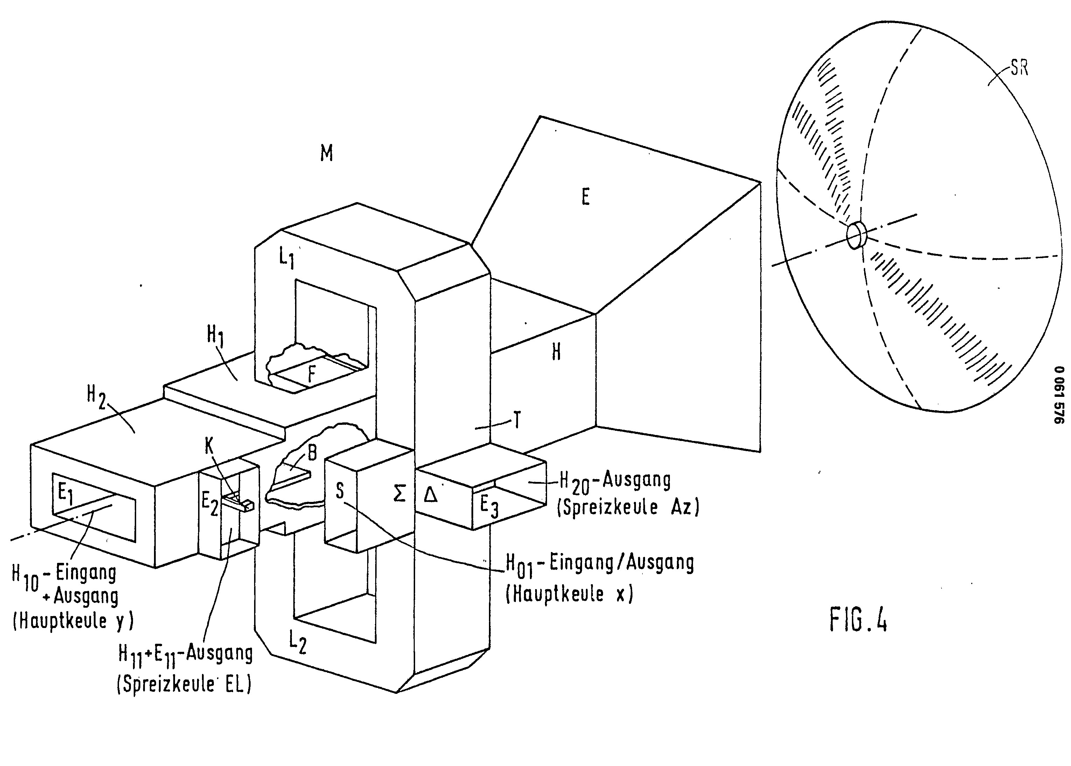

Fig. 4 zeigt perspektivisch den Aufbau eines Speisesystems für Mehrmodendiversity-Kombinationsempfang, bestehend aus Erreger, Subreflektor und Modenkoppler. Der Modenkoppler M hat insgesamt vier Hohlleitertore, von denen drei für Modendiversity-Kombinationsempfang ausgenutzt werden können ($E_1$, $E_2$, $E_3$). Das vierte Tor (S) kann als Sendeeingang genutzt werden. Der Ausgang $E_1$ ist an die $H_{10}$-Welle, $E_2$ an die $H_{11} + E_{11}$-Welle und $E_3$ an die $H_{20}$-Welle angekoppelt. Der Eingang S überträgt die orthogonale Polarisation ($H_{01}$-Welle). Die Nutzung von Tor S als Sendeeingang stellt eine elegante Möglichkeit einer Sende-Empfangstrennung dar. Durch die Entkopplung der Wellentypen untereinander sind alle Empfangstore vom Sendetor entkoppelt. Diese Massnahme erfordert aber zwingend, dass auf der Gegenantenne das Speisesystem axial um 90° verdreht in den Reflektor eingebaut werden muss. Besonders günstige Verhältnisse ergeben sich dann, wenn beide Speisesysteme unter 45° zu der Horizontal- bzw. Vertikalebene (untereinander aber um 90° verdreht) angeordnet werden. Bei der Montage der Speisesysteme in die Antenne braucht dann auf die Einbaulage gegenüberstehender Antennen nicht mehr geachtet zu werden.

Bei gleicher Montage der Erregersysteme ergibt sich die 90°-Verdrehung der Vektoren automatisch, da die Antennen im Betrieb gegeneinander ausgerichtet sind. Die axiale Verdrehung der Vektorebenen bringt noch einen weiteren Vorteil hinsichtlich der Spreizkeulen. Wenn die Antenne – was häufig der Fall ist – so ausgerichtet wird, dass die Hauptkeule nur wenig über den Horizont angehoben wird, so würden bei der nichtgedrehten Einbaulage die vertikale Spreizkeule mit ihrer unteren Keulenhälfte in die Erde blicken und einen Grossteil ihres Empfangsgewinns verlieren.

Bei der um 45° gedrehten Einbaulage verringert sich bezogen auf die Vertikalebene der Spreizwinkel um den Faktor

$$\frac{1}{\sqrt{2}}$$

so dass bei gleichem Anstellwinkel der Antenne mit einem höheren Empfangsgewinn in der vormals vertikal gespreizten Diversitykeule gerechnet werden kann. Allerdings wird durch diese Massnahme die vormals horizontal orientierte Spreizkeule auch um 45° gedreht, so dass nunmehr in beiden Spreizkeulen gleiche Verhältnisse (bedingt durch die Antennenausrichtung) erwartet werden können.

Nach diesen grundsätzlichen Bemerkungen soll nun näher auf die Ausgestaltung des Modenkopplers M (Fig. 4) eingegangen werden.

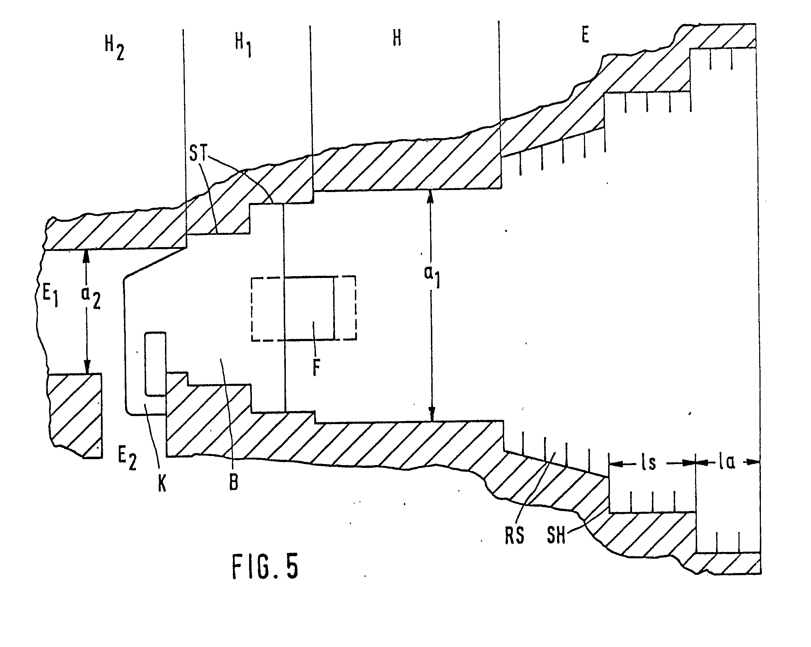

Dem Erregerhorn folgt ein rechteckiger Hohlleiter H, in dem alle auszuwertenden Wellentypen existenzfähig sein müssen. Durch ein Paar von axial orientierten und paarweise gegenüberliegenden Hohlleiterfenstern F werden die Energieanteile der $H_{01}$-Welle, sowie der $H_{20}$-Welle angekoppelt und über symmetrische Hohlleiter $L_1$, $L_2$ in einer Doppel-T-Verzweigung T getrennt. Das symmetrisch in den Hohlleiterabschnitten $H_1$, $H_2$ angeordnete Trennblech B verhindert eine Ausbreitung der $H_{01}$-Welle in den hinteren Abschnitt des Modenkopplers $H_2$. Gleichzeitig ist die Lage des Blechs B längs der Achse des Modenkopplers von entscheidender Bedeutung für die erreichbare Anpassung bei der Ankopplung der $H_{01}$-Welle. Das Trennblech B hat noch eine weitere Aufgabe; es führt die vom Erreger ankommende $H_{11} + E_{11}$-Welle in zwei gegenphasige Hohlleiterwellen über, deren Energie dann selektiv mit einem Koppelbügel K in den seitlich aufgesetzten Hohlleiter $E_2$ eingekoppelt wird. Die $H_{10}$-Welle läuft längs der Achse relativ ungestört in den hinteren Ausgang $E_1$. Ein Schnitt (Fig. 5) in der H-Ebene durch die Hohlleiterabschnitte H, $H_1$, $H_2$ und durch das Erregerhorn E verdeutlicht den inneren Aufbau des Speisesystems.

Der vordere Hohlleiter H habe die Breite $a_1$ und die Höhe $b_1$. Diese Breite ermöglicht die Existenz der $H_{20}$-Welle im Hohlleiter H, die Höhe $b_1$ jedoch nicht die Existenz der $H_{02}$-Welle, aber die Existenz der $H_{01}$-Welle. Etwa in Höhe der Einkoppelfenster F wird die Breite entweder stufenweise (ST) oder stetig auf das Mass $a_2$ reduziert, das zusammen mit einer zusätzlichen Reduzierung der Hohlleiterhöhe von $b_1$ auf $b_2$ nur noch die $H_{10}$-Welle zulässt. Im Falle der Verwendung aller beschriebener Wellentypen muss darauf geachtet werden, dass die Hohlleiterhöhe $b_1$ so gross gewählt wird, dass neben der zu übertragenden $H_{01}$-Welle auch die $H_{11} + E_{11}$-Welle bis zum Trennblech B existenzfähig bleibt. Bei einer möglichen vereinfachten Ausführung des Kopplers, die keine Verwendung der $H_{01}$-Welle erfordert, kann die Blende B bis in den vorderen Hohlleiter H vorgezogen werden. In diesem Falle muss aber ein zu übertragendes Sendesignal zusätzlich zum Empfangssignal über das Tor 1 ($H_{10}$-Welle) übertragen werden, was in bekannter Weise mittels Zirkulatoraufschaltung möglich ist.

Besondere Bedeutung kommt bei einer Mehrmodendiversityantenne der Ausgestaltung des Erregers zu. Dieser ist massgeblich für die Erreichung hoher Antennengewinne verantwortlich.

Es werden nun Massnahmen beschrieben, die eine Gewinnoptimierung für alle beteiligten Wellentypen ermöglichen. Mit klassischen Massnahmen (z. B. Einführung eines Rillenerregers) ist nur eine Gewinnoptimierung für die orthogonal polarisierten Hauptwellentypen $H_{10}$, $H_{01}$ möglich.

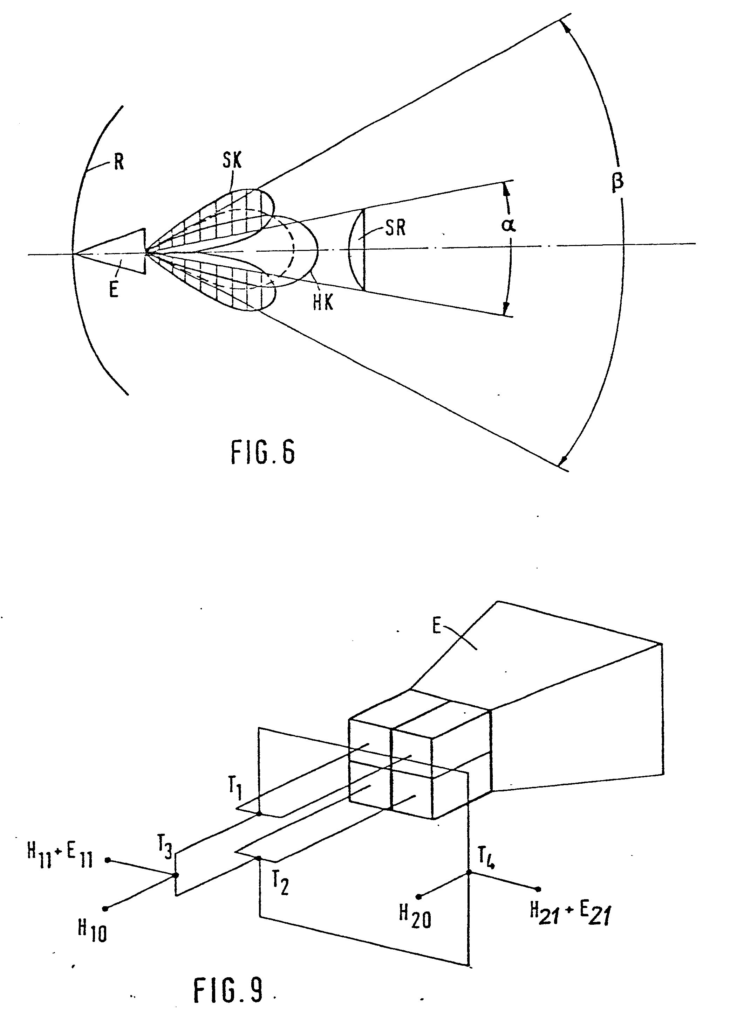

In der Praxis ergeben sich für einen Hauptwellentyp $H_{10}$ und einen höheren Wellentyp $H_{20}$ in der Antenne folgende Ausleuchtverhältnisse nach Fig. 6. Während ein Grossteil der vom Erreger gebildeten Primärkeule HK des Hauptwellentyps $H_{10}$ im Ausleuchtwinkelbereich α auf den Subreflektor SR fällt, bleibt der schraffierte Bereich der Spreizkeule SK ($H_{20}$-Welle) ausserhalb der Ausleuchtzone und geht damit für den Antennengewinn verloren. Es stellt sich in diesem Falle der normal zu erwartende Antennengewinn für die Hauptkeule ein, für die Spreizkeule ist eine deutliche Gewinnabnahme zu beachten. Im klassischen Falle ist ein Kompromiss zwischen beiden Antennenkeulen möglich, in dem durch Ändern der Antennengeometrie der Ausleuchtwinkel vergrössert wird und dadurch mehr Energie der Spreizkeule genutzt wird. Hier soll jedoch durch zusätzliche erfindungsgemässe Massnahmen eine weitere Steigerung des Antennengewinns ermöglicht werden, ohne einen Kompromiss eingehen zu müssen. Erfindungsgemäss wird dies so erreicht, dass die zu den Hauptwellentypen gehörenden Primärkeulen $H_{10}$, $H_{01}$ verbreitert werden (siehe gestrichelte Linie), ohne die Spreizkeule wesentlich zu verschmälern. Nach Durchführung der Verbreiterung muss die Antennengeometrie neu angepasst werden, d. h. die Hornapertur oder der Subreflektor wird an die neuen Verhältnisse angepasst.

Bei der Nutzung beider Hauptwellentypen $H_{10}$, $H_{01}$ ist zunächst die Einführung eines Rillenerregers sehr vorteilhaft (symmetrische Strahlungs-Keulenform in H- und E-Ebene). Weiterhin wird durch Einführung von stufenförmigen Querschnittserweiterungen bzw. von Knickstellen gemäss Fig. 5 eine Anregung weiterer Hybridwellentypen erreicht, die in beiden ausgenutzten Polarisationen des Erregers (hier $HE_{11}$-Wellen) die gewünschte Strahlen-Keulenverbreiterung erreichen. Als angeregte Welle wären hier insbesonde-

re die $H_{13}$-Welle für H-Ebene bzw. die $HE_{31}$-Welle für die E-Ebene zu nennen, die in Überlagerung mit der $HE_{11}$-Welle bei geeigneter Phasenlage eine Feldkonzentration in Aperturmitte des Erregers bewirkt und somit die gewünschte Keulenverbreiterung zur Folge hat.

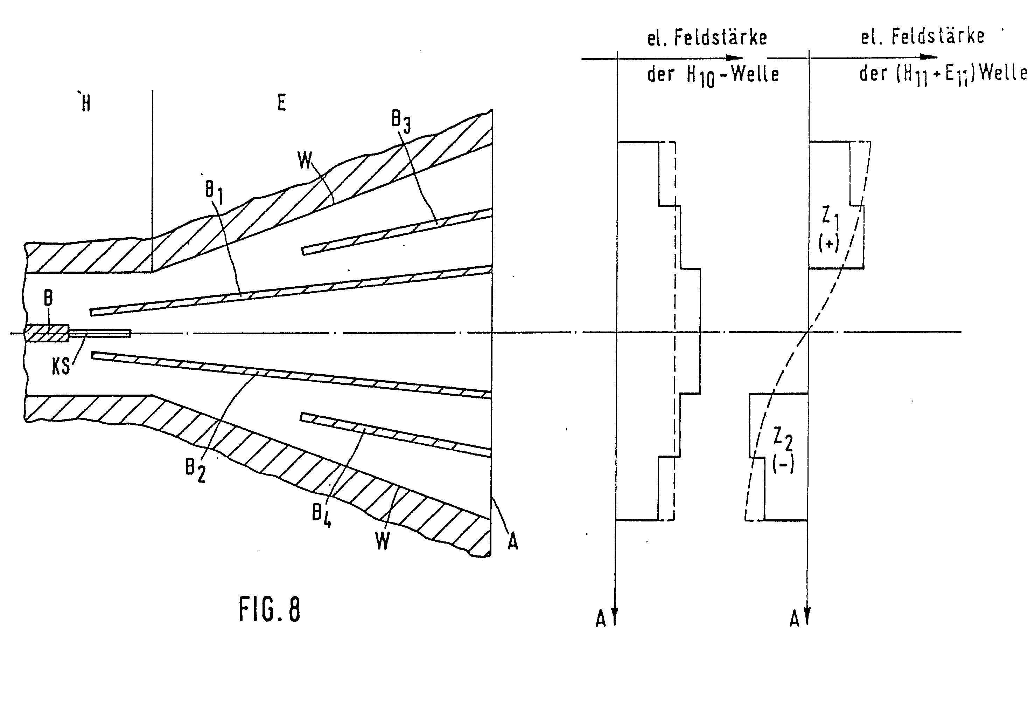

Fig. 7 zeigt diese Verhältnisse für die Verbreiterung in der E-Ebene. Die Längen $1_s$ der Stufen bzw. Knickabschnitte und ihr Abstand $1_a$ zur Erregerapertur wird so gewählt, dass die in Fig. 7 gezeigte Phasenlage entsteht. Die Querschnitts-Struktur des Horns wird bei Ausnutzung beider Polarisationen des Hauptwellentyps ($HE_{11}$) in allen Hornabschnitten quadratisch gewählt. Die Anordnung mehrerer Stufen SH (Fig. 5) macht den beschriebenen Effekt breitbandig.

Eine interessante Möglichkeit, die beschriebene Verbreiterung der Hauptkeule im Erregersystem mit sehr einfachen Mitteln durchzuführen, ergibt sich dann, wenn nur ein Hauptwellentyp $H_{10}$ im Antennensystem genutzt werden soll. Hier kann auf die Rillenstruktur im Erregerhorn verzichtet werden. Die Massnahmen zur Strahlungskeulenverbreiterung müssen aber dann in den beiden Hauptebenen des Erregers unterschiedlich ausgeführt werden.

Zunächst sei die Ebene der elektrischen Felder betrachtet (Fig. 8). Grundsätzlich sind auch hier Knickstellen, Sprünge usw. möglich, um eine Verbreiterung der Keule des Hauptwellentyps zu erhalten, jedoch ergibt sich hier durch Einführung der Blenden $B_1$, $B_2$, $B_3$, $B_4$ eine sehr einfache Möglichkeit im umgekehrten Wege die Strahlungskeulen des höheren Wellentyps in ihrem Ausleuchtwinkel an die Keule des Hauptwellentyps anzugleichen. Rotationssymmetrie erreicht man durch die Wahl des Seitenverhältnisses der Rechteckapertur des Erregerhorns.

In Fig. 8 ist das Ende des Trennblechs B (Modenkoppler) zusammen mit der Innenstruktur des rechteckigen bzw. quadratischen Erregerhorns E im Schnitt gezeichnet. Das Erregerhorn ist symmetrisch durch die Blenden $B_1$, $B_2$, $B_3$, $B_4$ in Kammern unterteilt. Dieses Kammerhorn ist an sich bekannt, es wird aber für die Anwendung mit mehreren Wellentypen so modifiziert, dass sich in der E-Ebene eine Verbreiterung der Strahlungskeule des Hauptwellentyps $H_{10}$ und eine Verschmälerung der Strahlenkeulen des höheren Wellentyps $H_{11}$ + $E_{11}$ ergibt. Dies wird so erreicht, dass die inneren Kammern (zwischen $B_1$, $B_2$) an ihrem Anfang (in der Nähe des Trennbleches B) so dimensioniert ist, dass in ihr die von B ausgehende $H_{11}$ + $E_{11}$-Welle nicht ausbreitungsfähig ist. Die von dem Hohlleiterabschnitt H ausgehenden $H_{10}$-Wellen werden durch die Blenden $B_1$, $B_2$, $B_3$, $B_4$ leistungsgemäss gemäss dem geometrischen Teilerverhältnis aufgeteilt und in den zwischen den Blenden gebildeten Hohlleitern weitergeleitet, zwischen $B_1$ und $B_2$ entsteht auch eine $H_{10}$-Welle. Durch die Neigung der Blenden zu den Hornwänden W ergibt sich in der Aperturebene A eine gegenüber den ungestörten (keine Blenden im Horn) Verhältnissen geänderte Feldverteilung, die längs der Geraden $A_1$ schematisch aufgetragen

ist. Die ursprünglich zu erwartende, ungestörte Verteilung ist gestrichelt gezeichnet. Gegenüber der ehemals konstanten Verteilung entsteht jetzt eine stärkere Feldkonzentration in der Mitte des Erregerhorns, was zu einer Verbreiterung der Strahlungskeule des Erregerhorns führt. Diese Massnahme hat nur dann einen Sinn, wenn gleichzeitig die dem höheren Wellentyp zugeordnete (oder davon abgeleitete) Strahlungskeule in ihrer Breite gleichbleibt oder eventuell noch schmäler gemacht werden kann. Dies wird durch die längs der Achse $A_2$ aufgetragene Feldverteilung der aus der $H_{11}$ + $E_{11}$-Welle hervorgegangenen Teilwellen erreicht. Bei der gezeigten Blendenkonfiguration entsteht in der Mittenzone ein feldtoter Raum. Dadurch werden die beiden gegenphasigen Feldzentren $Z_1$, $Z_2$ weiter auseinandergerückt, wodurch die resultierenden Strahlungskeulen verschmälert werden. Ganz wesentlich ist an dieser Verschmälerung auch der Feldstärkeabfall zum Aperturrand des Erregers hin beteiligt. Im Erreger ohne Blenden treten am Rande Feldstärkenmaxima auf, die zu sehr kräftigen Streufeldern (Beugung, Mantelströme) am Erregerrand führen und daher die Strahlungskeulen verbreitern (Feldverteilung gestrichelt gezeichnet). Durch den Übergang der von B ausgehenden $H_{11}$ + $E_{11}$-Welle in den Hohlleiterabschnitt mit den Blenden $B_1$, $B_2$ entsteht eine elektrische Stossstelle (feldtoter Raum zwischen $B_1$, $B_2$). Die dadurch bedingte Reflexion lässt sich jedoch durch eine Blindleitungsanordnung, z. B. in Form eines axial angeordneten leitenden Stiftes KS wiederum kompensieren. Dieser Stift KS hat, sofern er genügend dünn ist, keine schädliche Rückwirkung auf die ebenfalls zu übertragende $H_{10}$-Welle.

In der H-Ebene des Erregers müssen ebenfalls Massnahmen zur Beeinflussung der Strahlungskeulenbreiten getroffen werden. Hier ist jedoch keine neue Abbildung erforderlich; es kann auf die Querschnittsstufen und Knickstellen der Fig. 5 verwiesen werden. Auf die Rillenstruktur im Inneren des Erregers kann aber verzichtet werden. Die Querschnittssprünge regen insbesondere die $H_{30}$-Welle an, so dass bei geeigneter Phasenlage zum Feld der $H_{10}$-Welle in der Apertur eine geänderte Feldverteilung entsteht, die eine Verbreiterung der abgestrahlten Keule des Hauptwellentyps erbringt.

Zum Schluss sei noch ein völlig anders aufgebautes Speisesystem vorgestellt, das neben den Wellentypen $H_{10}$, $H_{11}$ + $E_{11}$, $H_{20}$ auch noch die Nutzung der $H_{21}$ + $E_{21}$-Welle ermöglicht.

Fig. 9 zeigt diese Anordnung, die aus vier in den Erreger mündenden Teilhohlleitern besteht, die alle mit magischen T's ($T_1$, $T_2$, $T_3$, $T_4$) zusammengeschaltet werden, so dass an deren Ausgängen die Energien der verschiedenen Wellentypen verfügbar sind.

**Patentansprüche**

1. Nachrichtenübertragungseinrichtung für Mikrowellen mit Mehrwegeausbreitung, das nach dem Winkeldiversity-Prinzip arbeitet, bestehend aus einer Sende und/oder Empfangseinrichtung mit einer Reflektorantenne (R) an jeder Endstelle und einem Hohlleitererreger (E), in dem ein Hauptwellentyp und Wellentypen höherer Ordnung ausbreitungsfähig sind, einem sich an das Erregerhorn anschliessenden Modenkoppler (M), zum Trennen der Energieanteile des Hauptwellentyps und Wellentypen höherer Ordnung, sowie Empfangs- und Kombinationseinrichtungen für die Gewinnung eines Bestsignals aus den empfangenen Energieanteilen der verschiedenen Wellentypen, dadurch gekennzeichnet, dass im Hohlleitererreger neben dem Hauptwellentyp mindestens zwei voneinander unabhängige Wellentypen höherer Ordnung oder Kombinationen hiervon mit der gleichen Polarisation wie der des Hauptwellentyps anregbar sind,

dass zur Vergrösserung des Strahlungsgewinns der Antenne der Hohlleitererreger sowohl in seiner Grundstruktur als auch durch zusätzliche Konstruktionselemente, wie Blendenpaare ($B_1$, $B_2$, $B_3$, $B_4$), Rillenstrukturen (RS), Abstufungen (SH) und Knickstellen derart ausgebildet sind,

dass in der Ebene des elektrischen wie auch in der Ebene des magnetischen Feldes der Öffnungswinkel ($\alpha$) der Strahlungskeule des Hauptwellentyps dem Öffnungswinkel ($\beta$) der Strahlungskeulen der höheren Wellentypen oder umgekehrt angeglichen ist,

dass der Modenkoppler (M) mehr als zwei voneinander unabhängige Empfangssignale aus den empfangenen Energieanteilen der verschiedenen Wellentypen getrennt den Empfangs- und Kombinationseinrichtungen zuführt,

dass der Modenkoppler (M) ein Sendetor (S) besitzt, welches einen Wellentyp anregt, dessen bevorzugte Feldrichtung orthogonal zur bevorzugten Feldrichtung des empfangenen Hauptwellentyps steht.

2. Nachrichtenübertragungseinrichtung nach Anspruch 1, dadurch gekennzeichnet, dass der Modenkoppler (M) in einem rechteckigen Hohlleiterabschnitt (H), dessen breite Seite in der H-Ebene des empfangenen Feldvektors liegt und aufgrund seines Querschnitts keine $H_{02}$-Welle zulässt, mit Hilfe eines symmetrisch angeordneten Trennblechs (B) über zwei gleiche, symmetrische Koppelfenster (F) sowohl die $H_{01}$- als auch die $H_{20}$-Welle breitbandig ankoppelt, wobei das Trennblech (B) in Höhe der Koppelfenster (F) endet und die von den Koppelfenstern (F) ausgekoppelten Energieanteile in einem symmetrisch nachgeschalteten magischen T gemäss den erregenden bzw. angeregten Wellentypen $H_{01}$, $H_{20}$ an verschiedenen Toren trennt.

3. Nachrichtenübertragungseinrichtung nach Anspruch 1, dadurch gekennzeichnet, dass bei orthogonalem Sende- und Empfangsbetrieb das Speisesystem um 45° gedreht gegenüber der horizontalen Richtung in den Reflektor eingebaut ist, so dass die Polarisationsrichtung der angeregten Wellentypen um 45° gedreht gegenüber der horizontalen Richtung ist.

4. Nachrichtenübertragungseinrichtung nach Anspruch 1, dadurch gekennzeichnet, dass das Speisesystem auf vier sich an das Erregerhorn anschliessenden Teilhohlleitern besteht, die alle mit magischen T's ($T_1$, $T_2$, $T_3$, $T_4$) so zusammengeschaltet sind, dass an deren Ausgängen neben den Wellentypen $H_{10}$, ($H_{11}$ + $E_{11}$), $H_{20}$ auch noch die ($H_{21}$ + $E_{21}$)-Welle nutzbar ist (Fig. 9).

## Claims

1. Communications transmission equipment, for microwaves with multipath propagation, which operates on the angle diversity principle and consists of a transmitter and/or receiver equipment with a reflector aerial (R) at each end point and a waveguide exciter (E), in which a fundamental wave type and wave types of higher order are capable of propagation, a mode coupler (M) which adjoins the exciter horn and is for the separation of the energy components of the fundamental wave type and wave types of higher order as well as receiver and combination equipments for the obtaining of a best signal from the received energy components of the different wave types, characterised thererby, that apart from the fundamental wave type, at least two mutually indepent wave types of higher order or combinations hereof are stimulatable in the waveguide exciter with the same polarisation as that of the fundamental wave type,

that to increase the radiation gain of the aerial, the waveguide exciter is constructed in its basic structure as well as also through additional constructional elements such as screen pairs ($B_1$, $B_2$, $B_3$, $B_4$), groove structures (RS), shoulders (SH) and kink places in such a manner,

that the aperture angle ($\alpha$) of the radiation lobe of the fundamental wave type is assimilated to the aperture angle ($\beta$) of the radiation lobes of the higher wave types or conversely in the plane of the electrical field as well as also in the plane of the magnetic field,

that the mode coupler (M) conducts more than two mutually independent received signals from the received energy components of the different wave types separately to the receiver and combination equipments and that the mode coupler (M) possesses a transmitting port (S), which stimulates a wave type, the preferred field direction of which stands orthogonally to the preferred field direction of the received fundamental wave type.

2. Communications transmission equipment according to claim 1, characterised thereby, that the mode coupler (M) couples the $H_{01}$ wave as well as also the $H_{20}$ wave in at wide bandwidth with the aid of a symmetrically arranged metal separating plate (B) by way of two like symmetrical coupling windows (F) in a rectangular waveguide portion (H), the wide side of which lies in the H-plane of the received field vector and which by reason of its cross-section permits no $H_{02}$ wave, wherein the metal separating plate (B) ends at the level of the coupling windows (F) and separates the energy components coupled out by the coupling windows (F) at different ports according to the exciting or stimulated wave types $H_{01}$ and $H_{20}$ in a magic T connected symmetrically there behind.

3. Communications transmission equipment according to claim 1, characterised thererby, that in the case of orthogonal transmitting and receiving operation, the feed system is built into the reflector turned through 45° relative to the horizontal direction so that the direction of polarisation of the stimulated wave types in turned through 45° relative to the horizontal direction.

4. Communications transmission equipment according to claim 1, characterised thereby, that the feed system consists of four partial waveguides which adjoin the exciter horn and are all so connected together with magic T's ($T_1$, $T_2$, $T_3$, $T_4$) that apart from the wave types $H_{10}$, ($H_{11} + E_{11}$) and $H_{20}$ also still the ($H_{21} + E_{21}$) wave is utilisable at their outputs (Fig. 9).

## Revendications

1. Dispositif de transmission d'informations pour micro-ondes avec propagation multitrajet, travaillant selon le principe de diversité angulaire, constitué d'un dispositif d'émission et/ou de réception comportant une antenne de réflecteur (R) à chaque terminal et un excitateur de guide d'ondes (E), dans lequel peuvent se propager un type principale et des types d'ondes d'ordre plus élevé, comportant aussi un coupleur de mode (M) venant à la suite du cornet excitateur pour séparer les portions d'énergie du type d'onde principale et des types d'ondes d'ordre plus élevé, ainsi que des dispositifs de réception et de combinaison pour obtenir un meilleur signal à partir des portions d'énergie reçues des différents types d'ondes, caractérisé en ce que dans l'excitateur de guide d'ondes, en plus du type d'onde principale, on peut exciter au moins deux types d'ondes, indépendants l'un de l'autre, d'ordre plus élevé ou des combinaisons d'entre eux, avec la même polarisation que celle du type d'onde principale, en ce que pour agrandir le gain de rayonnement de l'antenne, l'excitateur de guide d'ondes, aussi bien dans sa structure de base que par des éléments de construction supplémentaires, comme des paires de diaphragmes ($B_1$, $B_2$, $B_3$, $B_4$), des structures de stries (RS), des échelonnements (SH) et des points de brisure, est conçu de façon que, dans le plan du champ électrique comme dans le plan du champ magnétique, l'angle d'ouverture ($\alpha$) du lobe de rayonnement du type d'onde principale soit adapté à l'angle d'ouverture ($\beta$) des lobes de rayonnement des types d'ondes d'ordre supérieur ou inversement, que le coupleur de mode (M) conduise séparément aux dispositifs de réception et aux dispositifs de combinaison plus de deux signaux de réception, independants l'une de l'autre, provenant des portions d'énergie reçues des différents types d'ondes, que le coupleur de mode (M) possède une porte d'émission (S) qui excite un type d'onde dont la direction préférée de champ soit orthogonale à la direction préférée de ce champ du type d'onde principale reçue.

2. Dispositif de transmission d'informations, selon la revendication 1, caractérisé en ce que le coupleur de mode (M) n'autorise aucune onde $H_{02}$ dans un tronçon rectangulaire de guide d'ondes (H) dont le côté large se trouve dans le plan H du vecteur de champ reçu et du fait de sa section; en ce que ce coupleur de mode, à l'aide d'une tôle séparatrice (B) disposée symétriquement, couple par l'intermédiaire de deux fenêtres de couplage égales et symétriques (F), aussi bien l'onde $H_{01}$ que l'onde $H_{20}$, étant précisé que la tôle séparatrice (B) se termine au niveau de la fenêtre de couplage (F) et sépare les portions d'énergie découplées provenant des fenêtres de couplage (F) dans une lampe cathodique T mise en circuit symétriquement en aval, selon les types d'ondes excitatrices ou excitées $H_{01}$, $H_{20}$, aux différentes portes.

3. Dispositif de transmission d'informations selon la revendication 1, caractérisé en ce que, dans le cas d'une exploitation orthogonale en émission et en réception, le système d'alimentation est monté avec rotation de 45° par rapport à la direction horizontale dans le réflecteur, de sorte que la direction de polarisation des types d'ondes excitées est tournée de 45° par rapport à la direction horizontale.

4. Dispositif de transmission d'informations selon la revendication 1, caractérisé en ce que le système d'alimentation est constitué de quatre guides d'ondes partielles venant à la suite du cornet excitateur et qui sont tous mis en circuit avec les lampes cathodiques T ($T_1$, $T_2$, $T_3$, $T_3$) de façon qu'à leurs sorties, en plus des types d'ondes $H_{10}$, ($H_{11} + E_{11}$), $H_{20}$, on puisse encore utiliser l'onde ($H_{21} + E_{21}$) (fig. 9).

FIG. 1a

FIG. 1b

H₁₀-Welle   H₂₀-Welle

FIG.2a

FIG.2b

H₁₁-Welle   +   E₁₁-Welle   =   (H₁₁+E₁₁)-Welle

FIG.2c

FIG.2d

11

H$_{21}$-Welle + E$_{21}$-Welle = (H$_{21}$+ E$_{21}$)-Welle

## FIG. 3a

Elevationswinkel

Maximal-pegel

Azimutwinkel

Niveaulinien des rel. Pegels

## FIG. 3b

HE$_{11}$-Welle + HE$_{13}$-Welle = (HE$_{11}$ + HE$_{13}$)

## FIG. 7

13

FIG.4

$H_{10}$-Eingang +Ausgang (Hauptkeule y)

$H_{11}+E_{11}$-Ausgang (Spreizkeule EL)

$H_{20}$-Ausgang (Spreizkeule Az)

$H_{01}$-Eingang/Ausgang (Hauptkeule x)

0 061 576

FIG. 5

FIG.6

FIG.9

FIG. 8

el. Feldstärke der $H_{10}$-Welle

el. Feldstärke der $(H_{11} + E_{11})$ Welle

0 061 576